# EUROPÄISCHE PATENTSCHRIFT

(11) **EP 1 525 405 B1**
(45) Veröffentlichungstag und Bekanntmachung des Hinweises auf die Patenterteilung: **14.02.2007**
(21) Anmeldenummer: 03766289.7
(22) Anmeldetag: 24.07.2003
(51) Int. Cl.: F16C 33/24, F16C 33/04, C04B 35/56, C04B 35/565

(54) **Verfahren zu Herstellung einer Werkstoff mit einer Oberfläche aus einem Metallcarbid-Kohlenstoffoberfläche**
Method for producing a material comprsing a surface consisting of a metal carbide-carbon composite
Procédé pour fabriquer un matériau comportant une surface à base d'un composite carbure métallique-carbone

(30) Priorität: 01.08.2002 DE 10235269
(43) Veröffentlichungstag der Anmeldung: 27.04.2005
(73) Patentinhaber: ESK Ceramics GmbH & Co.KG, 87437 Kempten (DE)
(72) Erfinder: MESCHKE, Frank, 87474 Buchenberg (DE)
(74) Vertreter: Merkle, Gebhard
(86) Internationale Anmeldenummer: PCT/EP2003/008177
(87) Internationale Veröffentlichungsnummer: WO 2004/013505

(56) Entgegenhaltungen:
- EP-A- 1 188 942
- WO-A-01/16054
- WO-A-02/02956
- QUICK, NATHANIEL R.: "Laser Synthesis of Conductive Phases in Silicon Carbide Thin Film and Bulk Substrates" PROCEEDINGS OF THE INTERNATIONAL CONFERENCE ON LASERS, Bd. D, 1994, Seiten 696-702, XP001155543
- QUICK, NATHANIEL R. : "Laser synthesis of conductive phases in silicon carbide and aluminum nitride" NOVEL TECHNIQUES IN SYNTHESIS AND PROCESSING OF ADVANCED MATERIALS, PROCEEDINGS OF A SYMPOSIUM , 1995, Seiten 419-432, XP009018887
- PATENT ABSTRACTS OF JAPAN vol. 012, no. 272 (M-724), 28. Juli 1988 (1988-07-28) -& JP 63 053316 A (IBIDEN CO LTD), 7. März 1988 (1988-03-07)
- PATENT ABSTRACTS OF JAPAN vol. 009, no. 077 (M-369), 6. April 1985 (1985-04-06) -& JP 59 208219 A (TOUSHIBA ENGINEERING KK), 26. November 1984 (1984-11-26)
- PATENT ABSTRACTS OF JAPAN vol. 012, no. 179 (M-701), 26. Mai 1988 (1988-05-26) -& JP 62 288721 A (BROTHER IND LTD), 15. Dezember 1987 (1987-12-15)
- YURY G. GOGOTSI ET AL.: "Carbon coatings on silicon carbide by reaction with chlorine-containing gases" J. MATER. CHEM., Bd. 7, Nr. 9, 1997, Seiten 1841-1848, XP002257738 in der Anmeldung erwähnt

## Beschreibung

Die Erfindung betrifft ein Verfahren zur Herstellung eines Formkörpers aus einem Werkstoff mit einer Oberfläche aus einem Metallcarbid-Kohlenstoff-Komposit.

SiC-Werkstoffe als Vertreter für Metallcarbide sind aufgrund ihrer hohen Härte und der hierdurch bedingten Verschleißbeständigkeit, ihrer hohen thermischen Leitfähigkeit, der extrem guten Korrosionsbeständigkeit sowie der überragenden Steifigkeit hervorragend für den Einsatz als Lager und Dichtungen im chemischen Apparatebau geeignet (Bsp. Pumpenbau). Besonders verschleißbeständig sind auch Bauteile aus Titancarbid (TiC), Wolframcarbid (WC) und Borcarbid (B₄C). Diese Hartwerkstoffe werden in Reibsystemen oft gegen andere oder gleiche Hartwerkstoffe eingesetzt (hart/hart-Paarung). Ein.hoher Reibwert bewirkt jedoch in ungeschmierten oder mangelgeschmierten Gleit- und Reibsystemen (wie Pumpenlager und -dichtungen) einen enormen Temperaturanstieg auf über 200°C binnen weniger Minuten verbunden mit erheblichem Verschleiß an den Gleitflächen und nachfolgend einer kompletten Zerstörung der Kontaktflächen. Eine dauerhafte Trockenlaufbeständigkeit ist also nicht gegeben.

Um in hart/hart-gepaarten Reibsystemen die Temperaturentwicklung im Trockenlauf und bei Mangelschmierung abzumildern, ist es heutiger Stand der Technik dem SiC einen Festschmierstoff, meist partikulärer Kohlenstoff in Form von Graphit, einzulagern. Werkstoffe dieser Art lassen sich entweder pulvermetallurgisch oder durch Reaktionsbinden herstellen. SiC/Graphit-Werkstoffe die mit einem graphithaltigen SiC-Ausgangspulver pulvermetallurgisch hergestellt wurden, sind in US 4525461, EP-A-850898 und in DE-A-10111225 beschrieben. Patent US 4525461 beschreibt grafithaltige SiC-Werkstoffe mit einem Grundmaterial aus feinkörnigem gesintertem SiC. Patente EP-A-850898 und in DE-A-10111225 beschreiben gesinterte SiC-Werkstoffe mit grobkörniger, bimodaler Gefügestruktur. Einen Werkstoff dieser Sorte bietet die Wacker Chemie GmbH, Kempten, Deutschland, unter dem Namen EKasic® G Siliciumkarbid an.

Durch Silicium-Infiltration reaktionsgebundene Si-SiC Werkstoffe sind in der Literatur beschrieben (beispielsweise Handbook of Ceramic Hard Materials, Vol 2, Edt. Ralf Riedel Wiley-VCH(2000)S. 683-748) Der Siliciumgehalt beträgt typischerweise 10-15 Vol.-%, selten weniger als 5 Vol.-%. Diese Si-SiC Werkstoffe können zusätzlich bis zu 40 Vol.-% Graphit aufweisen. In allen genannten graphit-haltigen SiC-Werkstoffen ist der Graphit regellos, homogen im massiven SiC-Grundmaterial verteilt.

Die Trockenlaufbeständigkeit dieser SiC-Werkstoffe kann durch Steigerung des Graphitgehaltes verbessert werden. Verfahrenstechnisch ist jedoch eine Obergrenze des Graphitgehalts bedingt. In gesintertem SiC (S-SiC) kann beispielsweise mehr als 15 Vol.-% nur unter erheblicher Einbuße in der Sinterdichte realisiert werden, was zu einer Einschränkung in der Funktionstüchtigkeit von Gleitringdichtungen führt. Aufgrund dieser Limitierung kann den SiC-Werkstoffen in sogenannten hart/hart-Paarungen, bei denen der Werkstoff gegen sich selbst oder gegen andere Hartwerkstoffe in Reibung beansprucht wird, keine dauerhafte Trockenlauffähigkeit attestiert werden.

Eine Alternativlösung zur Einlagerung eines Festschmierstoffs in einen Gleitlagerwerkstoff beschreibt die PCT-Anmeldung WO 02/02956 A1 von SPS Bleistahl. Keramische Gleitlager bekommen nach maschineller Bearbeitung (Drehen, Fräsen und Bohren, z. B. im Grünzustand) einen Festschmierstoff (Graphit, Bornitrid) eingepresst. Nachfolgendes Sintern erlaubt ein Einschrumpfen der meist mehreren Millimeter großen und zylindrischen Festschmierstoffelemente. Diese sind kraftschlüssig, jedoch nicht stoffschlüssig gebunden. Nach diesem Verfahren sind keine Einlagerungen beliebiger Form oder Flächendeckung möglich, da in die SiC-Bauteile Leerräume gebohrt werden und diese mit Kernen aus Grafit o.ä. bestückt werden. Es eignet sich daher prinzipiell nur für runde Kerne. Die Ausrichtung der zylindrischen Kerne erfolgt bevorzugt senkrecht zur Gleitfläche. Die flächendeckung des Graphits in der Gleitfläche des hier offenbarten Werkstoffs ist begrenzt. Bei einem zu hohem Anteil an Einlagerungen müssen erhebliche Festigkeits- und Steifigkeitseinbußen des Bauteils hingenommen werden. Zudem führt ein Aufheizen des Werkstoffs potenziell zu einer Lockerung der Kerne.

Stand der Technik ist es auch, die Gleitreibungspartner mit einer reibungsvermindernden Kohlenstoffschicht zu bedecken. Mit der chemischen Gasphasenabscheidung (CVD) lassen sich auf die Oberfläche diamantartige Kohlenstoffschichten (DLC - Diamond-like Carbon), Diamantschichten oder Graphitschichten aufbringen. Der Abstract zu JP04041590 offenbart die Herstellung eines SiC-Formkörpers mit Graphitschicht unter Verwendung des CVD-Verfahrens.

Ein anderes Verfahren für die Herstellung von SiC mit einer geschlossenen Graphitdeckschicht wird in der Patentanmeldung DE 10045339 A1 (EP 1188942 A1) beschrieben. Bei diesem "Hochtemperaturverfahren" wird die thermische Zersetzung von SiC in Kohlenstoff und verdampfende Si-Phasen bei Temperaturen um 2000°C im Vakuum ausgenutzt. Die Oberfläche des SiC's wird dabei nicht mit einer geschlossenen Kohlenstoffschicht bedeckt, sondern in eine solche umgewandelt. Die entstandene Schicht liegt dabei (teil-)kristallin mit hohem Graphitanteil vor.

Ein anderes Verfahren zur Herstellung von SiC mit geschlossenen Graphitdeckschichten basiert auf dem sogenannten Chlorgas-Verfahren. Dabei wird ausgenutzt, dass Siliciumcarbid mit Hilfe eines Halogen-haltigen Gases, wie beispielsweise Chlor, bei Temperaturen oberhalb 800 °C in Siliziumphasen (Siliziumtetrachlorid) und Kohlenstoff zersetzt werden kann. Diese Reaktion ist seit 1914 bekannt und wird in Standardwerken der Materialwissenschaft erwähnt. (Encyclopedia of Advanced Materials, Pergamon Press, page 2455-2461, 1994). In der Literatur wird beschrieben, dass je nach Konzentration des Halogen-haltigen Gases, der Temperatur und Zeit des Prozesses der resultierende Kohlenstoff als Diamant, diamant-ähnlicher Kohlenstoff, Graphit oder amorphen Kohlenstoff auf der Oberfläche von Metallcarbiden, insbesondere SiC, verbleibt (Y. G. Gogotsi, I. Jeon and M.J.McNallan, Carbon coatings on silicon carbide by reaction with chlorine-containing gases, J.Mater. Chem. 1997, 7 (9), p. 1841-1848 und WO 01/16054 vom 1.9.1999). Als geeignete Rahmenbedingungen wird die Auslagerung in einem mit 2% - 3,5 Gew.-% Chlor angereichertem Gas bei Temperaturen von 800°C -1200°C und Drücken von 0 - 100 Atmosphären genannt. Ähnlich wie in DE 10045339 A1 (EP 1188942 A1) verbleibt der Kohlenstoff als eine geschlossene Deckschicht auf dem SiC.

Bedingt durch ihr Haftvermögen, ihren begrenzten Schichtdicken und der limitierten Temperaturstabilität weisen geschlossene Diamant- und DLC- Deckschichten im Trockenlauf nur eine begrenzte Lebensdauer auf, meist im Bereich weniger Minuten bis zu einigen Stunden. Die geschlossenen Graphitdeckschichten weisen zwar Vorteile hinsichtlich Temperaturbeständigkeit und Reibverluste auf, verschleißen aber aufgrund einer geringen Härte entsprechend schnell.

Aufgabe der vorliegenden Erfindung ist es, ein Verfahren zur Herstellung eines Formkörpers aus einem Werkstoff zur Verfügung zu stellen, der einer tribologischen Belastung besser standhält als ein bekannter SiC-basierter oder B₄C-basierter Werkstoff oder als ein Werkstoff mit einer reibungsvermindernden, geschlossenen Deckschicht.

Diese Aufgabe wird gelöst durch ein Verfahren zur Herstellung eines Formkörpers, dadurch gekennzeichnet, dass ein Werkstoff mit einer Metallcarbid-Oberfläche in Anwesenheit eines Reaktionsgases mittels einer Strahlungsquelle in einem definierten Bereich seiner Oberfläche auf 600-1500°C erhitzt wird, so dass es in diesem Bereich zu einer lokalen Umwandlung des Metallcarbids in Kohlenstoff kommt, wobei als Reaktionsgas ein mit einem Halogen versetztes Trägergas verwendet wird und das Reaktionsgas derart beschaffen ist, dass es in dem vorgegebenen Temperaturbereich das Metall des Metallcarbids herauszulösen vermag und Kohlenstoff zurücklässt.

Gemäß einer alternativen Ausführungsform wird die Aufgabe gelöst durch ein Verfahren zur Herstellung eines Formkörpers, dadurch gekennzeichnet, dass ein Werkstoff mit einer Metallcarbid-Oberfläche in Anwesenheit eines Schutzgases oder in einem Vakuum mittels einer Strahlungsquelle in einem definierten Bereich seiner Oberfläche auf mehr als 1500°C und weniger als 2200°C erhitzt wird, so dass es in diesem Bereich zu einer lokalen Umwandlung des Metallcarbids in Kohlenstoff kommt, wobei sich Metallcarbid ohne Beteiligung fremder Elemente in Metall und Kohlenstoff zersetzt.

Das erfindungsgemäße Verfahren ermöglicht den Erhalt eines Werkstoffes mit einer Oberfläche aus einem Metallcarbid-Kohlenstoff-Komposit, wobei die Metallcarbid-Oberfläche in geometrisch definierten Bereichen stoffschlüssig gebundenen Kohlenstoff bis in eine Tiefe von 0,01 bis 1000 µm enthält.

In das Metallcarbid können eine oder mehrere amorphe und/oder kristalline Phasen eingelagert sein. Bei der amorphen und/oder kristallinen Phase handelt es sich beispielsweise um Graphit, Silizium oder yttrium-Aluminium-Granat, Kobald. Solche Werkstoffe, aber ohne die erfindungsgemäß erzielbare Schicht aus Kohlenstoff an der Oberfläche in definierten Bereichen bis in eine Tiefe von 0,01 bis 1000 µm sind Stand der Technik (Reaktionsgebundenes SiSiC, flüssigphasengesintertes SiC, Wolframcarbid oder Borcarbid) . Bevorzugterweise ist die mit einer Schicht aus Kohlenstoff versehene Oberfläche des Werkstoffs plan.

Bei dem Metallcarbid handelt es sich bevorzugt um SiC.. Es handelt sich vorzugsweise um einen SiC-Sinterkörper oder einen Körper aus reaktionsgebundenem Si-SiC oder um eine SiC-Deckschicht auf einem beliebigen Substrat.

Besonders bevorzugt ist ein SiC-Sinterkörper mit 0- 15 Vol.-% Porosität.

Der SiC-Sinterkörper besteht vorzugsweise aus gesintertem SiC (einschließlich rekristallisiertem SiC) mit 0-30 Gew.-% einer oder mehreren Fremdphasen. Als Fremdphase sind beispielsweise Graphit, Silicium und Yttrium-Aluminium-Granat erlaubt. Der Gehalt an Fremdphasen sollte so gering wie möglich sein. Besonders bevorzugt sind SiC-Sinterkörper mit einem Fremdphasenanteil < 5 Gew.-%.

Der SiC-Sinterkörper besteht insbesondere besonders bevorzugt aus gesintertem SiC.

Das gesinterte SiC enthält bis zu 5 Gew.-% Bor und/oder Aluminium und weist 0-25 Gew.-% freien, partikulären Kohlenstoff auf. Das gesinterte SiC hat bevorzugterweise eine grobkörnige, bimodale Gefügestruktur mit einer Korngröße zwischen 1 µm und 1500 µm.

Die erfindungsgemäß in definierten Teilbereichen der Oberfläche bis in eine Tiefe von 0,01 bis 1000 µm erzielbare Kohlenstoffschicht ist stoffschlüssig mit dem SiC verbunden und haftet damit besonders gut. Bei dem Kohlenstoff handelt es sich vorzugsweise um amorphen Kohlenstoff, teilkristallinen Kohlenstoff, Graphit, diamantartigen Kohlenstoff, Diamant oder Gemische daraus. Bevorzugt handelt es sich um einen graphithaltigen Kohlenstoff. Besonders bevorzugt handelt es sich um Graphit. Der Kohlenstoff ist ein Produkt aus einem Ätzverfahren mit Chlorgas oder einem Hochtemperaturzersetzungsverfahren. Der Kohlenstoff daher kann komplett amorph oder auch vollständig auskristallisiert vorliegen. Er kann aber auch aus einem Gemisch aus amorphen oder kristallinen Phasen bestehen. Dies ist im Sinne der vorliegenden Erfindung unter "teilkristallin" zu verstehen.

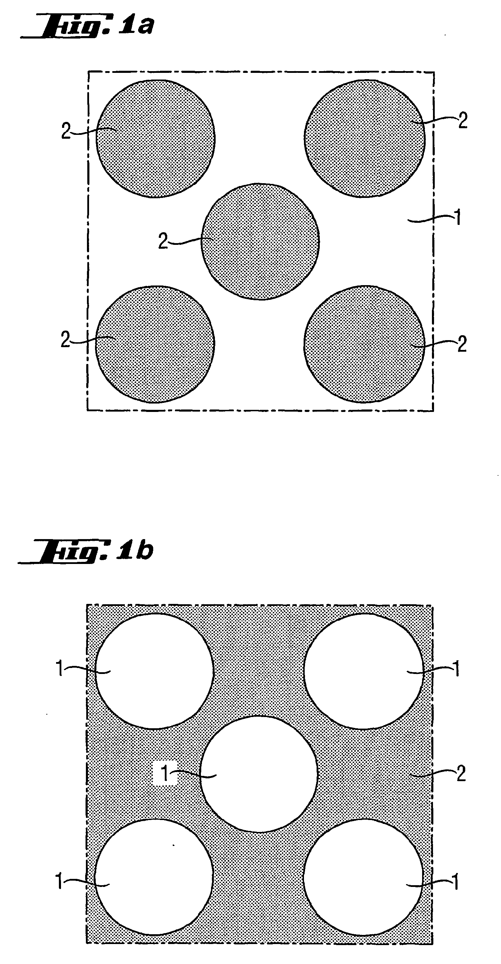

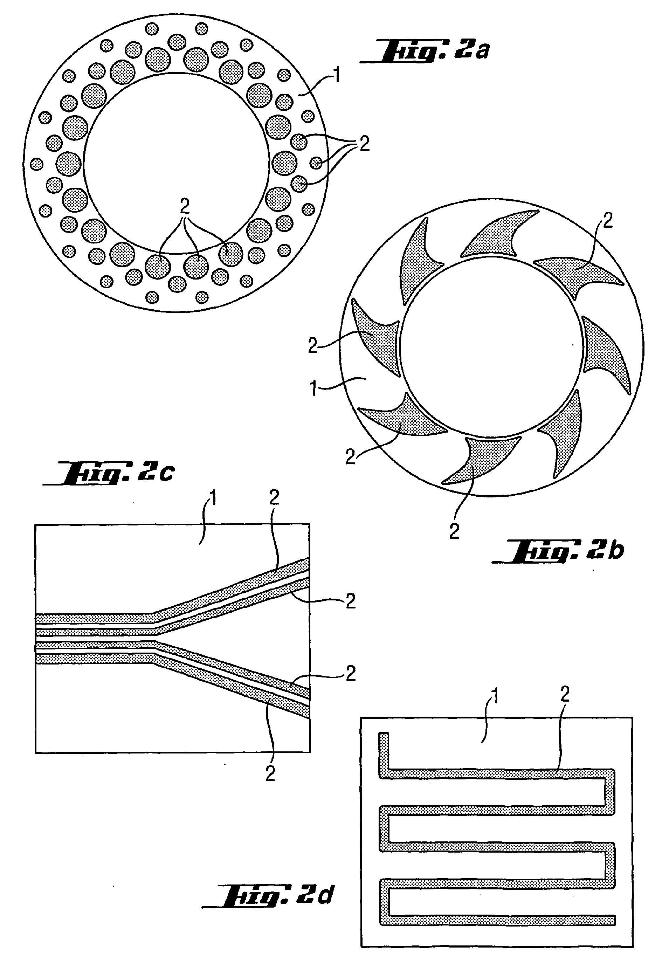

Die erfindungsgemäß erzielbaren Kohlenstoff-Teilbereiche der Oberfläche haben eine beliebige aber jeweils erwünschte, vordefinierte Gestalt. Beispiele für die Form der Teilbereiche sind Kreisflächen oder nicht-runde Formen wie Streifen, Sicheln, oder ähnliches. Fig. 1 und 2 zeigen exemplarisch einige Beispiele für Kohlenstoff-Teilbereiche auf einer Metallcarbid-Oberfläche. Die Flächenanteile der Kohlenstoffeinlagerungen mit vordefinierter Gestalt beträgen in tribologisch hoch belasteten Oberflächenbereichen 0,1 - 99 Flächenprozent, bevorzugt 5 - 95%, besonders bevorzugt 15 - 90 %, insbesondere bevorzugt 25 - 80 %.

Vorzugsweise beträgt die Dicke der Kohlenstoffelemente 0,01 - 50 µm.

Die geometrische Form der Graphiteinlagerungen wird idealer Weise so gewählt, dass eine besonders effiziente Schmierung in der Gleitfläche gegeben ist.

Das zwischen den Kohlenstoffeinlagerungen an der Oberfläche verbleibende SiC stellt bei Reibkontakt mit einem Hartwerkstoff abrasiv schwer zu entfernende Traganteile dar, womit das Abtragsverhalten des erfindungsgemäß erzielbaren Werkstoffs im Vergleich zu dem einer geschlossenen Graphitdeckschicht erheblich verbessert wird.

Beispiele für Anwendungen der erfindungsgemäß erzielbaren Werkstoffe sind hart/hart-gepaarte Gleitlager und -Gleitringdichtungen die lokal an den Stellen der Oberfläche, an denen die tribologische Belastung am höchsten ist, derart konzentriert mit einer Graphitschicht versehen sind, dass auch unter extremster Flüssigkeitsmangelschmierung oder im Trockenlauf eine Feststoffschmierung gewährleistet ist und eine Schädigung infolge eines Temperaturanstiegs ausbleibt.

Die hier am Beispiel eines SiC-Sinterkörpers/einer SiC-Oberfläche getroffenen Aussagen gelten analog für andere Metallcarbid-Sinterkörper/Metallcarbid-Oberflächen beispielsweise aus B₄C oder TiC oder WC.

Bei dem Metallcarbid handelt es sich bevorzugt um SiC. Die im Folgenden für SiC dargelegten Ausführungen gelten analog für andere Metallcarbide.

Das erfindungsgemäße Verfahren ermöglicht eine hohe Flexibilität bezüglich der Gestaltung von Graphitflächen und deren Verteilung in einer SiC-Oberfläche. So können durch das erfindungsgemäße Verfahren SiC-basierte Gleitlager und -Gleitringdichtungen lokal an den Stellen, an denen die tribologische Belastung am höchsten ist, derart konzentriert mit Graphit versehen werden, dass stets eine ausreichende Feststoffschmierung -auch unter extremster Flüssigkeitsmangelschmierung oder im Trockenlauf- gewährleistet ist und eine Schädigung infolge eines überhöhten Temperaturanstiegs ausbleibt.

Als Ausgangsmaterial für das erfindungsgemäße Verfahren ist jedes beliebige Metallcarbid, vorzugsweise jeder beliebige SiC - Werkstoff geeignet. Ebenso geeignet sind Materialien die eine Metallcarbid-Deckschicht auf einem beliebigen Substrat tragen.

Gemäß der ersten Verfahrensvariante wird das Metallcarbid-Material mit Hilfe einer Strahlungsquelle lokal bestrahlt und so in den vordefinierten Bereichen auf 600-1500°C erhitzt und die Metallcarbid-Oberfläche dabei dem Reaktionsgas ausgesetzt, wobei das Reaktionsgas derart beschaffen ist, dass es in dem vorgegebenen Temperaturbereich das Metall des Metalcarbids herauszulösen vermag und Kohlenstoff zurücklässt.

Das mit der Strahlquelle bestrahlte Metallcarbid-Material kann selbst bereits vorerhitzt sein: Der durch die Bestrahlung erzeugte Kohlenstoff liegt in Form von amorphem oder teilkristallinem Kohlenstoff, Grafit, Diamant oder einer anderen Modifikation oder eines Gemisches dieser Varianten vor.

Als Reaktionsgas wird ein mit einem Halogen oder Halogengemisch (Fluor, Chlor, Brom, Jod oder Gemische daraus) versetztes Trägergas verwendet. Als Halogen wird Chlor bevorzugt. Als ein inertes Trägergas wird vorzugsweise Argon, Helium, Krypton oder Stickstoff, besonders bevorzugt Argon verwendet. Alternativ kann auch HCl verwendet werden.

Um die Bildung bestimmter Kohlenstoffmodifikationen zu stimulieren, kann dem Reaktionsgas als Additiv zusätzlich Wasserstoff in Mengen von 0,1 bis zu 99 Gew.-%, bevorzugt 0,1 bis 10 gew.-% zugegeben werden.

Gemäß der zweiten Verfahrensvariante wird die mit einer Strahlquelle bestrahlte Oberfläche einem Vakuum oder Schutzgas, bevorzugt mit einem Gasdruck kleiner als 100 mbar, besonders bevorzugt kleiner 10⁻³ mbar, ausgesetzt, wobei die lokale Temperatur dann mit Hilfe der Strahlungsquelle lokal auf mehr als 1500°C und weniger als 2200°C erhitzt wird. In diesem Falle zersetzt sich Metallcarbid ohne Beteiligung fremder Elemente in Metall und Kohlenstoff. Bei dem Schutzgas handelt es sich vorzugsweise um Argon oder Stickstoff.

Als Strahlquelle können beispielsweise ein Laser, eine Mikrowelle oder ein Elektronenstrahl dienen. Bei Verwendung des Reationsgases wird vorzugsweise ein Laser verwendet. Idealerweise ist an den Laser eine Scanneroptik angeschlossen. Die Scanneroptik dient zur besonders schnellen Führung des Laserstrahls. Als Laser werden Neodym-YAG-Laser oder CO₂-Laser bevorzugt. Besonders bevorzugt wird ein Neodym-YAG-Laser eingesetzt. Bei Verwendung des Vakuums eignet sich insbesondere ein Elektronenstrahl zur lokalen Erwärmung und Umwandlung.

Die Verfahrensparameter für den Laser, insbesondere Lampenstrom, Pulslänge, Pulspause, Fokuslänge, und Bestrahlungszeit können über einen weiten Bereich variiert werden. Ein möglicher Parametersatz besteht beispielsweise in 540 mA Lampenstrom, 0.32 ms Pulslänge, 18.4 ms Pulspause, 150 mm Fokuslage und 20 s Bestrahlungsdauer.

Die lokale Bestrahlung mit einem Laser, insbesondere unter Verwendung einer Scanneroptik ermöglicht es, beliebige Bereiche einer Metallcarbid-Oberfläche in Kohlenstoff umzuwandeln. Der Geometrie und dem Flächengehalt sind dabei keine Grenzen gesetzt.

Neben dünnwandigen Metallcarbid-Bauteilen können auch Metallcarbid-Deckschichten auf einem Substrat mit dem erfindungsgemäßem Verfahren lokal in beliebiger Form und zu beliebigen Volumenanteilen komplett in Kohlenstoff umgewandelt werden.

Das erfindungsgemäße Verfahren erlaubt die Herstellung tribologisch hoch belastbarer und zudem dauerhaft trockenlauffähiger Metallcarbid-Kohlenstoff-Komposit-Werkstoffoberflächen, beispielsweise für Gleitlager und hart/hart-gepaarte Gleitringdichtungen. Bauteile aus diesem Werkstoff werden auch den Anforderungen nach hoher Bauteilsteifigkeit, -festigkeit und Temperaturstabilität gerecht. Als Anwendungen ergeben sich tribologische beanspruchte Reibsysteme aller Art, insbesondere trockenlaufende Gleitlager, trockenlaufende Gleitringdichtung, trockenlaufende Kolbenpumpe, Kompressoren und Ventillagerungen.

Die Figuren 1a und 1b zeigen schematisch zwei komplementäre Beispiele eines erfindungsgemäß erzielbaren Metallcarbid-Kohlenstoff-Komposits mit 50% Flächendeckung an Kohlenstoffschicht. Mit 1 ist die Metallcarbid-Oberfläche gekennzeichnet, mit 2 die Kohlenstoff-Einlagerungen.

Die Figuren 2a, 2b, 2c und 2d zeigen schematisch Beispiele von Metallcarbid-Kohlenstoff-Komposit-Oberflächen mit strukturierten Kohlenstoff-(Graphit-) Einlagerungen.

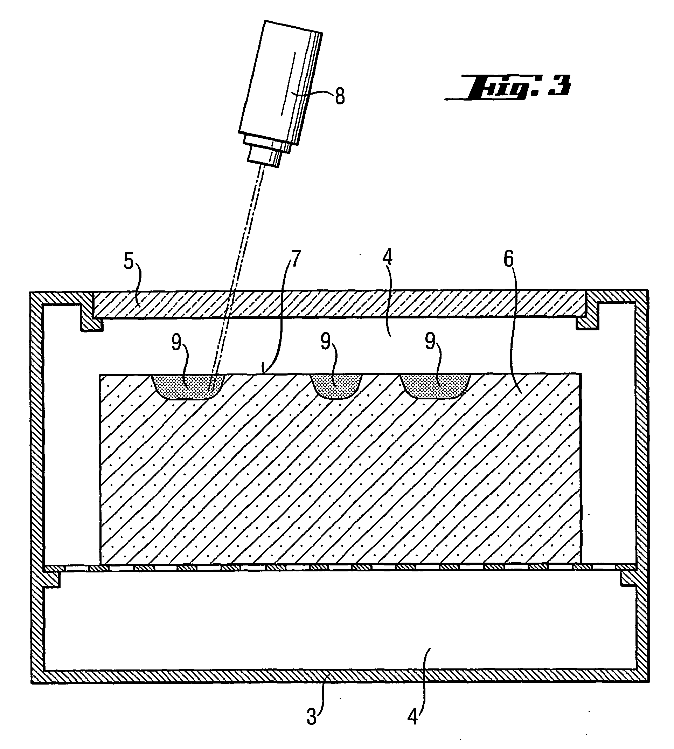

Fig. 3 zeigt schematisch das erfindungsgemäße Herstellungsverfahren für die lokale Umwandlung von Metallcarbid in Kohlenstoff. In einer Kammer (3) mit einem Reaktionsgas (4) und einem Glasfenster (5) ist ein gegebenenfalls vorerhitztes Werkstück (6) mit einer Metallcarbid-Oberfläche (7) ausgelagert. Mit einem Laser (8) wird die Oberfläche (7) lokal erhitzt und eine Umwandlung in Kohlenstoff (9) stimuliert.

Die Kohlenstoff-Bestandteile sind elektrisch leitfähig und können damit bei geeigneter Strukturierung neben der Verbesserung der Schmierbedingung auch Sekundäraufgaben übernehmen. Darunter ist beispielsweise das Ableiten elektrischer Potentiale zu verstehen oder die Verwendung als Heizelement.

Die folgenden Beispiele dienen der weiteren Erläuterung der Erfindung.

Beispiel 1: Ein Axiallager aus feinkörnig gesintertem S-SiC (EKasic® F Siliciumkarbid), käuflich erhältlich bei Wacker Chemie GmbH, München, Deutschland, wird in einer Reaktionskammer einem Gas aus Ar/2% Chlor ausgesetzt. Die Stirnseite der Buchse (Durchmesser außen 32 mm, Durchmesser innen 18 mm) wird mit einem Nd-YAG-Laser (1,06 µm Wellenlänge) lokal auf 800°C erhitzt. Der Strahl wird so geführt, dass Kreisflächen aus Graphit-haltigem Kohlenstoff mit einem Durchmesser von 500 µm gleichmäßig verteilt in der Oberfläche der axialen Belastungsfläche entstehen. Der Flächenanteil des Graphits liegt bei 75%. Die Dicke der Kohlenstoffeinlagerungen beträgt 5 µm.

Beispiel 2: Eine Gleitlager-Wellenschutzhülse aus grobkörnig gesintertem S-SiC (Ekasic® C Siliciumkarbid), käuflich erhältlich bei Wacker Chemie GmbH, Kempten, Deutschland, wird in einer Reaktionskammer auf eine rotierende Welle gelagert und mit einem Gas aus Ar/2% Chlor überströmt. Ein Nd-YAG-Laser (1,06 µm Wellenlänge) erhitzt das Bauteil lokal auf 1000°C und induziert dort eine Umwandlung in Graphit-reichen Kohlenstoff. Der Laser und das Gleitlager werden so geführt, dass eine wendelförmige Spur aus Graphit-haltigem Kohlenstoff mit einer Breite von 2 mm in der zylindrischen äußeren Oberfläche der SiC-Wellenschutzhülse entsteht. Die Dicke der Kohlenstoffeinlagerung beträgt 5 µm.

Beispiel 3: Ein Gleitring aus feinkörnig gesintertem S-SiC (E-Kasic® F Siliciumkarbid, Wacker Chemie GmbH, München, Durchmesser innen 44 mm, Wandstärke 4 mm) wird mit einer zweiten Laserquelle in der Reaktionskammer auf 400°C vorgeheizt. Die Probe wird mit einem Reaktionsgas bestehend aus Argon mit 2% Chlor/ 2% H₂ überströmt. Der Nd-YAG (1,06 µm)-Primärlaser erhitzt die Gleitfläche lokal auf 900°C. Dieser Primärlaser wird so geführt, dass Dreiecksflächen am Innenrand entstehen. Orientierung und Abstand der Dreiecke ist so gewählt, dass am Innenrand die Flächenbelegung mit graphit-haltigem Kohlenstoff 80% beträgt. Die Einlagerungen reichen bis in eine Tiefe von 10 µm.

Beispiel 4: Ein Gleitring einer Abmessung wie in Beispiel 3 aus grobkörnig gesintertem S-SiC mit partikulären Graphiteinlagerungen (erhältlich unter der Bezeichnung EKasic® G Siliciumkarbid, bei Wacker Chemie GmbH, München, Deutschland) wurde, wie in Bsp. 3 beschrieben, behandelt. Durch die zusätzlichen Graphitpartikel im Grundwerkstoff steigt der KohlenstoffGehalt in der SiC-Oberfläche nahe des Innenrandes des Gleitrings auf über 80 % an. Die Graphitpartikel des Grundwerkstoffs sind in die entstandene Graphiteinlagerungen eingebettet.

Beispiel 5: Ein feinkörniger Gasdichtungsring aus Flüssigphasen-gesintertem SiC mit Yttrium-Aluminium-Granat als kristalline Sekundärphase (EKasic® T Siliciumkarbid), Durchmesser innen 200 mm, Wandstärke 30 mm wird in der Reaktionskammer einem strömendem Gasgemisch aus Argon mit 2% Chlor/ 2% H₂ ausgesetzt. Ein Nd-YAG-Primärlaser erhitzt die Gleitfläche lokal auf 1000°C. Der Primärlaser wird so geführt, dass Linien einer Breite von 50 µm vom Außenrand, radial nach innen verlaufen.

Beispiel 6: Ein Gleitring aus feinkörnig gesintertem S-SiC (EKasic® F Siliciumkarbid, Wacker Chemie GmbH, München) gemäß Beispiel 3 wird mit einer zweiten Laserquelle in der Reaktionskammer auf 700°C vorgeheizt. Die Probe wird mit einem Reaktionsgas bestehend aus Argon mit 3% Chlor überströmt. Ein Diodenlaser (808 nm)-Primärlaser erhitzt die Gleitfläche lokal auf 1300°C. Dieser Primärlaser wird so geführt, dass Sicheln aus graphit-haltigem Kohlenstoff entstehen deren Flächenbelegung 60% übersteigt. Die Orientierung der Sicheln ist in Bezug auf Drehsinn so gewählt, dass der Festschmierstoff effektiv in die Bereiche der Mangelschmierung getragen werden. Die Einlagerungen reichen bis in eine Tiefe von 10 µm.

Beispiel 7: Eine Axiallagerplatte aus grobkörnig gesintertem S-SiC (EKasic® C Siliciumkarbid, Wacker Chemie GmbH, München, Durchmesser außen 65 mm, innen 45 mm) wird mit einem defokussierten 30 kV Elektronenstrahl in einer Reaktionskammer mit einem Vakuum niedriger als 1x10⁻⁴ mbar auf 1500°C vorgeheizt. Mit einem fokussierten Elektronenstrahl werden gleichzeitig bei einer lokalen Temperatur von 1950°C scheibenförmige Kohlenstoffeinlagerungen als Festschmierstoffpolster in regelmäßigem Punktemuster eingebracht. Orientierung und Abstand der Schmierpolster ist so gewählt, dass die Flächenbelegung 70% beträgt. Die Einlagerungen reichen bis in eine Tiefe von 200 µm.

## Patentansprüche

1. Verfahren zur Herstellung eines Formkörpers, **dadurch gekennzeichnet, dass** ein Werkstoff mit einer Metallcarbid-Oberfläche in Anwesenheit eines Reaktionsgases mittels einer Strahlungsquelle in einem definierten Bereich seiner Oberfläche auf 600-1500°C erhitzt wird, so dass es in diesem Bereich zu einer lokalen Umwandlung des Metallcarbids in Kohlenstoff kommt, wobei als Reaktionsgas ein mit einem Halogen versetztes Trägergas verwendet wird und das Reaktionsgas derart beschaffen ist, dass es in dem vorgegebenen Temperaturbereich das Metall des Metallcarbids herauszulösen vermag und Kohlenstoff zurücklässt.

2. Verfahren nach Anspruch 1, **dadurch gekennzeichnet, dass** als Halogen Chlor und als Trägergas Argon verwendet wird.

3. Verfahren zur Herstellung eines Formkörpers, **dadurch gekennzeichnet, dass** ein Werkstoff mit einer Metallcarbid-Oberfläche in Anwesenheit eines Schutzgases oder in einem Vakuum mittels einer Strahlungsquelle in einem definierten Bereich seiner Oberfläche auf mehr als 1500°C und weniger als 2200°C erhitzt wird, so dass es in diesem Bereich zu einer lokalen Umwandlung des Metallcarbids in Kohlenstoff kommt, wobei sich Metallcarbid ohne Beteiligung fremder Elemente in Metall und Kohlenstoff zersetzt.

4. Verfahren nach einem der Ansprüche 1 bis 3, **dadurch gekennzeichnet, dass** als Strahlungsquelle ein Laser, eine Mikrowelle oder ein Elektronenstrahl verwendet wird.

## Claims

1. A process for producing a shaped body, **characterized in that** a material with a metal carbide surface is heated in a defined region of its surface, in the presence of a reaction gas, by means of a radiation source to 600-1500°C, in such a manner that in this region the metal carbide is locally converted into carbon, wherein the reaction gas used is a carrier gas mixed with a halogen, and the reaction gas being such that in the predetermined temperature range it is able to dissolve the metal of the metal carbide and leave behind carbon.

2. The process as claimed in claim 1, **characterized in that** the halogen used is chlorine and the carrier gas used is argon.

3. A process for producing a shaped body, **characterized in that** a material with a metal carbide surface is heated in a defined region of its surface, in the presence of a shielding gas or in a vacuum, by means of a radiation source to more than 1500°C and less than 2200°C. in such a manner that in this region the metal carbide is locally converted into carbon, with metal carbide decomposing into metal and carbon without the involvement of foreign elements.

4. The process as claimed in one of claims 1 to 3, **characterized in that** the radiation source used is a laser, a microwave or an electron beam.

## Revendications

1. Procédé de fabrication d'un solide **caractérisé en ce qu'**un matériau avec une surface en carbure métallique est chauffé à 600-1500°C en présence d'un gaz de réaction au moyen d'une source de rayonnements dans un domaine défini de sa surface de sorte que dans ce domaine, cela entraîne une transformation locale du carbure métallique en carbone, dans lequel on utilise comme gaz de réaction un gaz vecteur mélangé à un halogène et dans lequel le gaz de réaction est fourni de telle manière qu'il puisse, dans le domaine de température prédéterminé, extraire par dissolution le métal du carbure métallique et laisser le carbone.

2. Procédé selon la revendication 1 **caractérisé en ce qu'**on utilise comme halogène le chlore et comme gaz vecteur l'argon.

3. Procédé de fabrication d'un solide **caractérisé en ce qu'**un matériau avec une surface en carbure métallique est chauffé en présence d'un gaz protecteur ou sous vide au moyen d'une source de rayonnements dans un domaine défini de sa surface à plus de 1500°C et moins de 2200°C de sorte que dans ce domaine, cela entraîne une transformation locale du carbure métallique en carbone, dans lequel le carbure métallique se décompose sans participation d'éléments étrangers dans le métal ni dans le carbone.

4. Procédé selon l'une quelconque des revendications 1 à 3 **caractérisé en ce qu'**on utilise comme source de rayonnements un laser, un rayonnement micro-ondes ou électronique.
